# EUROPÄISCHE PATENTSCHRIFT

(11) **EP 2 456 594 B1**
(45) Veröffentlichungstag und Bekanntmachung des Hinweises auf die Patenterteilung: **24.01.2018**
(21) Anmeldenummer: 10734020.0
(22) Anmeldetag: 07.07.2010
(51) Int. Cl.: H01F 38/14, H02K 41/02, H02K 11/20, H02K 11/24, B23P 19/02, H02K 7/06

(54) **ELEKTROMECHANISCHES FÜGEMODUL MIT KRAFTAUFNEHMER**
ELECTROMECHANICAL JOINING MODULE HAVING A FORCE TRANSDUCER
MODULE D ASSEMBLAGE ÉLECTROMÉCANIQUE À CAPTEUR DE FORCE

(30) Priorität: 22.07.2009 CH 11522009
(43) Veröffentlichungstag der Anmeldung: 30.05.2012
(73) Patentinhaber: Kistler Holding AG, 8408 Winterthur (CH)
(72) Erfinder: KIRCHHEIM, Andreas, CH-8422 Pfungen (CH); SCHNEIDER, Jochen, DE-73614 Schorndorf (DE); OTTER, Daniel, CH-8311 Brütten (CH); SCHAFFNER, Georges, CH-8335 Hittnau (CH); THIEL, Rolf, CH-8400 Winterthur (CH)
(86) Internationale Anmeldenummer: PCT/CH2010/000174
(87) Internationale Veröffentlichungsnummer: WO 2011/009223

(56) Entgegenhaltungen:
- EP-A- 1 057 586
- WO-A1-02/23147
- WO-A1-2004/025202
- DE-A1- 10 251 387
- DE-A1- 19 721 072
- DE-A1-102006 030 218
- GB-A- 2 274 928

## Beschreibung

### Technisches Gebiet

Die Erfindung betrifft ein Elektromechanisches Fügemodul zum Aufbringen einer linearen Kraft auf einen Fügekörper, umfassend einen Stator, welcher den feststehenden Teil des Fügemoduls darstellt, einen aus dem Stator linear ausfahrbaren Stössel mit einem äusseren Stösselende, sowie einen Kraftaufnehmer zum Erfassen von Kräften, welche im Betrieb vom Stösselende auf den Fügekörper aufgebracht werden.

### Stand der Technik

Elektromechanische Fügemodule sind Elektromotoren; welche mittels eines Stössels eine linear ausgerichtete Kraft auf einen Fügekörper aufbringen. Verbreitet sind insbesondere Fügemodule für Montageprozessen, bei welchen formschlüssige Verbindungen hergestellt werden. Ein solches Fügemodul ist beispielsweise aus der DE 19721072 bekannt. Diese Schrift geht allerdings nicht auf Kraftmessungen ein.

Solche Fügemodule verfügen manchmal über Kraftmesseinrichtungen, welche die vom Fügemodul auf einen Fügekörper aufgebrachte Kraft messen. So erfasste Messdaten werden für die Steuerung der Prozesse und/oder für die Qualitätsüberwachung gebraucht.

Bei den bekannten Fügemodulen wird die Kraft meist im Gehäuse des Fügemoduls erfasst. Dabei ist die Genauigkeit aufgrund der Lagerreibung, der Kraftnebenschlüsse sowie der trägen Masse der bewegten Teile eingeschränkt. Alternativ kann ein Kraftaufnehmer am Fügekörper integriert werden. Die Kabelverbindung zum Kraftaufnehmer ist aber mechanisch aufwendig und störanfällig und die Lebensdauer dieser Kabelverbindung ist stark eingeschränkt.

Aus der EP 1057586 ist ein Werkzeug für dir Umform- Stanz- und Spritzgusstechnik bekannt, bei dem ein Kraftsensor in der Funktionsoberfläche des Werkzeuges eingebettet ist. Dies ist geeignet, um Verschleissparameter am Werkzeug zu ermitteln, nicht aber die Kraft beim Fügen als Gesamtes zu messen. Dazu soll speziell vermieden werden, dass der Sensor Teil der Funktionsfläche ist, um Messfehler aufgrund von lokalen Inhomogenitäten zu vermeiden. Zudem beschreibt diese Schrift keine Aktorik, mit der das Werkzeug bewegt und mit der auf das Werkzeug Kraft aufgebracht wird. Somit ist auch nicht beschrieben, wie die Messdaten von einem Fügekörper auf einen sich dazu linear bewegenden Stator übertragen werden.

In der DE 10251387 wird eine Pressvorrichtung beschrieben, welches einen Drehmomentsensor umfasst. Bei diesem ist die Bewegung zwischen dem beweglichen Teil und dem stationären Teil eine Rotation, wodurch der Abstand zwischen beiden Komponenten quasi konstant bleibt. Dies ist ein typisches Fügemodul, wie es schon lange bekannt ist. Mit dem Drehmomentsensor wird indirekt über die Spindelsteigung die Kraft auf das Werkzeug ermittelt. Unbekannte, variable Reibkräfte der Spindel führen zu grösseren Messfehlern. Da sich der Sensor nicht translatorisch bewegt, ist eine Telemetrie-Übertragung der Messdaten unproblematisch.

### Darstellung der Erfindung

Aufgabe der vorliegenden Erfindung ist es, ein elektromechanisches Fügemodul eingangs angegebener Art zu nennen, bei welchen Kraftmessungen der Stösselkräfte mit verbesserter Genauigkeit durchgeführt werden können, wobei die Messvorrichtung für eine lange Lebensdauer ausgelegt sein soll und eine grosse Zahl an Bewegungszyklen unbeschadet und ohne Qualitätsminderung überstehen kann. Zudem soll das Fügemodul mit der Messvorrichtung einen einfachen Aufbau aufweisen und wartungsarm sein sowie kundenspezifische Anpassungen ohne Zusatzaufwand ermöglichen.

Die Aufgabe wird dadurch gelöst, dass der Kraftaufnehmer im Bereich des Stösselendes angebracht ist und über eine Sensorelektronik verfügt zum kabellosen Übertragen von Messdaten mittels Nahfeldtelemetrie. Für die Übertragung mit Nahfeldtelemetrie ist die Sensorelektronik erfindungsgemäss mit einer Stösselspule verbunden, welche sich über den gesamten ausfahrbaren Bereich des Stössels erstreckt. Der Stator verfügt nahe der Stösselspule über eine Statorelektronik zum kabellosen Versorgen der Sensorelektronik mit Energie und zum Empfangen der Messdaten mittels Nahfeldtelemetrie.

Einer der Vorteile eines erfindungsgemässen Fügemoduls ist die hohe Genauigkeit der damit durchführbaren Kraftmessung, da keine Fehlereinflüsse durch Lagerreibung, Kraftnebenschlüsse und träge Masse wirken können. Das Kraftmesssystem ist wartungsfrei und die Lebensdauer ist weitgehend unabhängig von der Anzahl an Lastzyklen.

Insbesondere ist diese Anordnung einfach zu realisieren und kann auch in einer Umgebung eingesetzt werden, wo Fernfeldtelemetrie wegen einer Strahlenbelastung der Umgebung Probleme bereiten könnte. Die Lösung bietet den Vorteil, dass keine störenden Kabel im Weg sind, die allenfalls beschädigt werden könnten und dass die Kräfte unverfälscht im Bereich des Stösselendes aufgenommen werden, nahe der Kraft auftretenden Flächen, ohne Kraftnebenschlüssen.

### Kurze Beschreibung der Zeichnungen

Im Folgenden wird die Erfindung unter Beizug der Zeichnungen näher erklärt. Es zeigen
- Fig. 1: eine schematische Seitenansicht eines erfindungsgemässen Fügemoduls in (a) eingefahrenem Zustand und (b) in ausgefahrenem Zustand;
- Fig. 2: eine erfindungsgemässe schematische Darstellung des Fügemoduls im Bereich des Stössels in ausgefahrenem Zustand;
- Fig. 3: eine Darstellung des erfindungsgemässen Stössels (a) mit Stösselspule und (b) eine Detailansicht der Stösselspule;
- Fig. 4: einen Querschnitt des Stössels im Bereich der Statorelektronik;
- Fig. 5: eine Detailansicht von Fig. 4 im Bereich von Stösselspule, Speisespule und Empfangsspule.

### Wege zur Ausführung der Erfindung

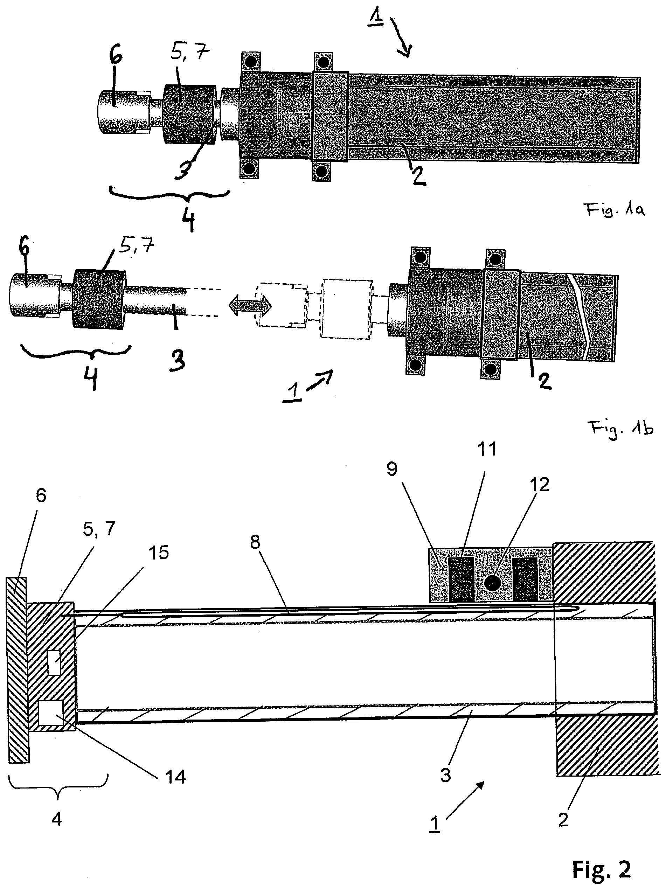

Die Fig. 1 zeigt ein elektromechanisches Fügemodul 1 umfassend einen Stator 2, der einen feststehenden Teil des Fügemoduls 1 darstellt, und einen Stössel 3, der in einer linearen Richtung aus dem Stator 2 ausgeführt werden kann. Fig. 1a zeigt das Fügemodul 1 im eingefahrenen Zustand, Fig. 1b in einem Zustand mit ausgefahrenem Stössel 3.

Der Stössel 3 hat ein äusseres Ende 4, an dem eine Werkzeugaufnahme 6 angebracht sein kann. Erfindungsgemäss befindet sich im Bereich des Stösselendes 4 ein Kraftaufnehmer 5, der die Kraft messen kann, die im Gebrauch vom Stösselende 4 her wirkt. Dieser Kraftaufnehmer 5 verfügt über eine Sensorelektronik 7 zum kabellosen Übertragen von Messdaten mittels Nahfeld- oder Fernfeldtelemetrie.

Im Folgenden wird in den Fig. 2-5 die Übertragung mittels Nahfeldtelemetrie beschrieben.

Fig. 2 zeigt einen ausgefahrenen Stössel 3 in einem Stator 2 des Fügemoduls 1 mit Kraftaufnehmer 5, der erfindungsgemäss am Stösselende 4 angebracht ist, in dieser Darstellung zwischen Werkzeugaufnahme 6 und Stössel 3.

Erfindungsgemäss verfügt der Kraftaufnehmer 5 über eine Sensorelektronik 7 zum kabellosen Übertragen von Messdaten mittels Nahfeldtelemetrie. Diese Sensorelektronik 7 ist mit einer Stösselspule 8 verbunden, welche sich über den gesamten ausfahrbaren Bereich des Stössels 3 erstreckt. Vorzugsweise ist diese Stösselspule 8 in einer Nut 10 im Stössel 3 angeordnet. Der Stator 2 verfügt nahe der Stösselspule 8 über eine Statorelektronik 9 zum kabellosen Versorgen der Sensorelektronik 7 mit Energie und zum Empfangen der Messdaten mittels Nahfeld-Telemetrie.

Diese Statorelektronik 9 umfasst in dieser erfindungsgemässen Anordnung eine oder mehrere Speisespulen 11, welche ein Magnet-Wechselfeld erzeugen können. So wird eine Spannung in der Stösselspule 8 induziert, wodurch die Sensorelektronik 7 mit Energie versorgt wird. Zudem können auf diesem Weg auch sensorrelevante Daten zur Sensorelektronik 7 geschickt werden, welche für die Messung mittels Kraftaufnehmer 5 verwendet werden, wie beispielsweise die Empfindlichkeit des Sensors. Vorteilhaft ist in diesem Zusammenhang, wenn die Sensorelektronik 7 einen Datenspeicher 14 umfasst zum Speichern von solchen messrelevanten Daten.

Zudem verfügt die Statorelektronik 9 über eine Empfangsspule oder eine Empfangsantenne 12 zum Empfangen von erfassten Messwerten und/oder weiterer Informationen wie Status der Sensorelektronik, Messbereich, Skalierinformationen und/oder Kalibrierdaten.

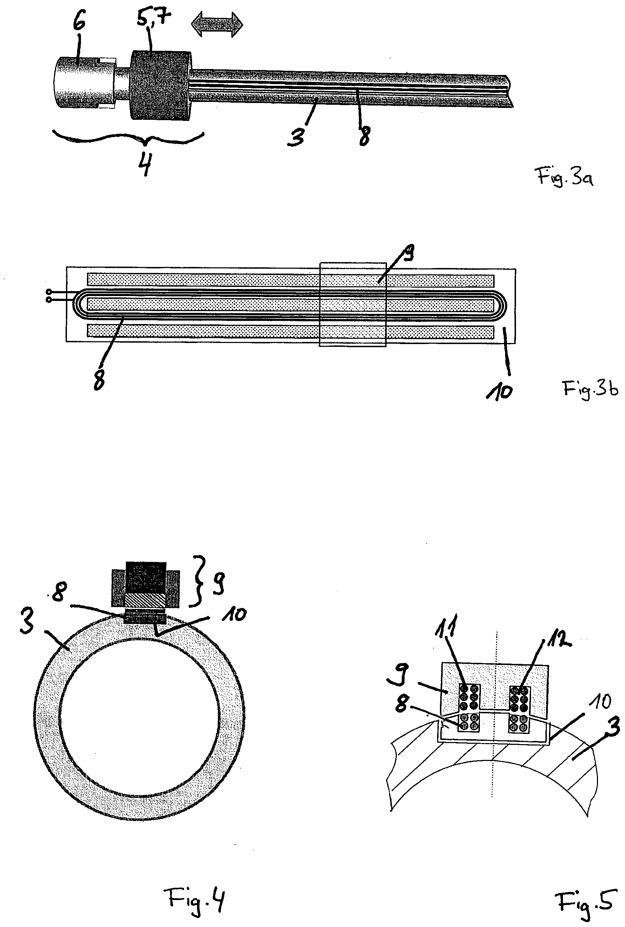

Fig. 3a zeigt einen erfindungsgemässen Stössel 3 mit Stösselspule 8, wobei Fig. 3b in detaillierter Darstellung die Stösselspule 8 in der Nut 10 angeordnet ,zeigt. In dieser Darstellung in Fig. 3b ist die Statorelektronik 9 in einem mittleren Bereich des Stössels 3 dargestellt, die Stösselspule 8 überlappend.

Fig. 4 zeigt einen Querschnitt des Stössels 3 im Bereich der Statorelektronik 9. Aus dieser Darstellung geht hervor, dass die Statorelektronik 9 mit der oder den Stator-Speisespulen 11 nahe der Stösselspule 8 angeordnet ist, unabhängig von der Stösselposition. Fig. 5 ist eine Detailansicht der Fig. 4 im Bereich der Spulen. Die Darstellung zeigt die nahe gegenüber liegenden, berührungslos angeordneten Primär- und Sekundärwicklungen, namentlich die Stator-Speisespule 11 und die Empfangsspule 12 als Primärwicklungen und die Stösselspule 8 auf dem Stössel 3 als Sekundärwicklung.

Es hat sich als vorteilhaft erwiesen, die Messwerte durch elektromagnetische Kopplung über einen modulierten Träger mittels Phasen-Modulation (PSK-Modulation) von der Stösselspule 8 auf die Empfangsspule 12 zu übertragen, wobei ein Träger von ca. 13.56 MHz oder ca. 27.1 MHz verwendet wird. Neben den Messwerten können weitere Statusinformationen von der Sensorelektronik 9 zum Stator 2 übertragen werden, wie Informationen über den Kraftsensor, Messbereiche, Skaleninformationen, Kalibrierdaten etc. Die Daten werden bevorzugt digitalisiert übertragen.

Für die Energieübertragung wird eine Trägerfrequenz von 119 bis 135 kHz genutzt. Die Signale für die Energieübertragung können auch moduliert werden, um Steuerinformationen an die Sensorelektronik 9 zu übertragen. Als Modulationsverfahren wird ebenfalls eine Phasen-Modulation (PSK-Modulation) verwendet. Zur Anpassung der übertragenen Leistung wird die Trägerfrequenz am Stator im Bereich von 119 bis 135 kHz verändert.

In einer bevorzugten Ausführung ist der Kraftaufnehmer 5 ein piezoelektrischer Kraftsensor.

Insbesondere kann das erfindungsgemässe Fügemodul 1 zusätzlich einen Wegsensor 15 aufweisen zum Erfassen eines Stösselweges oder einer Stösselposition. Dieser kann im Gebrauch beispielsweise den Abstand zu einem Fügekörper ermitteln, auf den das Fügemodul eine Kraft ausübt. Vorzugsweise kann der Wegsensor 15 ein inkrementeller, induktiver oder optischer Sensor sein.

Alternativ zur Nahfeldtelemetrie kann das Fügemodul 1, in einem nicht erfindungsgemäßen Beispiel, mit einer Sensorelektronik 7 versehen sein, welche über ein Sendemodul verfügt zum Übertragen der Messdaten mittels Fernfeldtelemetrie. In diesem Fall sollte die Sensorelektronik 7 einen Akkumulator umfassen. Dieser Akkumulator kann beispielsweise ebenfalls vom Stator aus geladen werden, beispielsweise.wenn der Stössel 3 ganz eingefahren ist, mittels entsprechend daran angebrachten Kontakten. Möglich wäre auch ein regelmässiger Austausch des Akkumulators. Der Vorteil einer solchen Anordnung ist, dass die Messdaten direkt an eine Auswerteeinheit an einem beliebigen Ort geschickt werden können zur weiteren Verarbeitung und/oder zur Steuerung des Fügemoduls 1, ohne dass von diesem Messdaten zu einer Steuereinheit weiter geleitet werden müssen.

### Bezugszeichenliste

- 1: Fügemodul
- 2: Stator
- 3: Stössel
- 4: Stösselende
- 5: Kraftaufnehmer
- 6: Werkzeugaufnahme
- 7: Sensorelektronik
- 8: Stösselspule
- 9: Statorelektronik
- 10: Nut
- 11: Speisespule
- 12: Empfangsspule oder Empfangsantenne
- 14: Datenspeicher
- 15: Wegsensor

## Patentansprüche

1. Elektromechanisches Fügemodul zum Aufbringen einer linearen Kraft auf einen Fügekörper, umfassend einen Stator (2), welcher den feststehende Teil des Fügemoduls darstellt, einen aus dem Stator (2) linear ausfahrbaren Stössel (3) mit einem äusseren Stösselende (4), sowie einen Kraftaufnehmer (5) zum Erfassen von Kräften, welche im Betrieb vom Stösselende (4) auf den Fügekörper aufgebracht werden, wobei der Kraftaufnehmer (5) im Bereich des Stösselendes (4) angebracht ist und über eine Sensorelektronik (7) verfügt zum kabellosen Übertragen von Messdaten mittels Nahfeldtelemetrie, wobei die Sensorelektronik (7) mit einer Stösselspule (8) verbunden ist, welche sich über den gesamten ausfahrbaren Bereich des Stössels (3) erstreckt, wobei der Stator (2) nahe der Stösselspule (8) über eine Statorelektronik (9) verfügt zum kabellosen Versorgen der Sensorelektronik (7) mit Energie und zum Empfangen der Messdaten mittels Nahfeld-Telemetrie.

2. Fügemodul nach Anspruch 1, **dadurch gekennzeichnet, dass** der Kraftaufnehmer (5) ein piezoelektrischer Kraftsensor ist oder einen Dehnmessstreifen umfasst.

3. Fügemodul nach Anspruch 1 oder 2, **dadurch gekennzeichnet, dass** die Sensorelektronik (7) einen Datenspeicher (14) umfasst zum Speichern von messrelevanten Daten.

4. Fügemodul nach einem der vorhergehenden Ansprüche, umfassend einen Wegsensor (15) zum Erfassen eines Stösselweges oder einer Stösselposition.

5. Fügemodul nach Anspruch 4, **dadurch gekennzeichnet, dass** der Wegsensor (15) im Gebrauch den Abstand zu einem Fügekörper ermitteln kann, auf den das Fügemodul eine Kraft ausübt.

6. Fügemodul nach Anspruch 4 oder 5, **dadurch gekennzeichnet, dass** der Wegsensor (15) ein inkrementeller, induktiver oder optischer Sensor ist.

7. Fügemodul einem der vorhergehenden Ansprüche, **dadurch gekennzeichnet, dass** die Stösselspule (8) in einer Nut (10) im Stössel (3) angeordnet ist.

8. Fügemodul nach einem der vorhergehenden Ansprüche, **dadurch gekennzeichnet, dass** die Statorelektronik (9) eine oder mehrere Speisespulen (11) umfasst, welche ein Magnet-Wechselfeld erzeugen können zum induzieren einer Spannung in der Stösselspule (8) für die Energieversorgung der Sensorelektronik (7).

9. Fügemodul nach einem der vorhergehenden Ansprüche, **dadurch gekennzeichnet, dass** die Statorelektronik (9) über eine Empfangsspule oder eine Empfangsantenne (12) verfügt zum Empfangen von erfassten Messwerten und/oder weiterer Informationen wie Status der Sensorelektronik, Messbereich, Skalierinformationen und/oder Kalibrierdaten.

## Claims

1. An electromechanical joining module for applying a linear force onto a joining element and comprising a stator (2) which represents the stationary part of the joining module, a tappet (3) that is extendible in a linear direction out of the stator (2) and has an outer tappet end (4), further comprising a force transducer (5) for detecting forces that are applied during operation from the tappet end (4) onto the joining element, wherein said force transducer (5) is attached in the area of the tappet end (4) and is provided with sensor electronics (7) for wireless transmission of measurement data by means of near field telemetry, said sensor electronics (7) being connected to a tappet coil (8) which extends over the entire extendible portion of the tappet (3), wherein said stator (2) comprises stator electronics (9) close to said tappet coil (8) for wirelessly supplying power to said sensor electronics (7) and for receiving the measurement data by means of near field telemetry.

2. The joining module according to claim 1, **characterized in that** the force transducer (5) is a piezoelectric force transducer or comprises a strain gauge.

3. The joining module according to claim 1 or 2, **characterized in that** the sensor electronics (7) comprise a data memory (14) for storing data in relation to measurement.

4. The joining module according to any of the preceding claims comprising a path sensor (15) for detecting a tappet path or a tappet position.

5. The joining module according to claim 4, **characterized in that** during use said path sensor (15) is able to detect the distance to a joining element onto which the joining module exerts a force.

6. The joining module according to claim 4 or 5, **characterized in that** said path sensor (15) is an incremental, inductive or optical sensor.

7. The joining module according to any of the preceding claims, **characterized in that** the tappet coil (8) is arranged in a groove (10) in the tappet (3).

8. The joining module according to any of the preceding claims, **characterized in that** the stator electronics (9) comprise one or more supply coils (11) able to generate a magnetic alternating field for inducing a voltage in the tappet coil (8) for supplying power to the sensor electronics (7).

9. The joining module according to any of the preceding claims, **characterized in that** the stator electronics (9) are provided with a receiver coil or a receiver antenna (12) for receiving captured measurement values and/or further information such as the status of the sensor electronics, measurement range, scaling information and/or calibration data.

## Revendications

1. Module d'assemblage électromécanique pour appliquer une force linéaire sur un corps d'assemblage et comprenant un stator (2) représentant la partie fixe du module d'assemblage, un poussoir (3) pouvant être dégagé du stator (2) de façon linéaire et ayant une extrémité extérieure de poussoir (4), ainsi qu'un capteur de force (5) pour détecter des forces appliquées au cours du fonctionnement de l'extrémité de poussoir (4) sur le corps d'assemblage, dans lequel ledit capteur de force (5) est disposé dans la zone de l'extrémité de poussoir (4) et dispose d'une électronique du capteur (7) pour la transmission sans fil des données de mesure au moyen de télémétrie à champ proche, ladite électronique du capteur (7) étant connectée à un enroulement de poussoir (8) s'étendant sur toute la partie que peut être dégagé du poussoir (3), dans lequel ledit stator (2) comprend une électronique du stator (9) près de l'enroulement de poussoir (8) pour alimenter en électricité par voie sans fil ladite électronique du capteur (7) et pour recevoir des données de mesure au moyen de télémétrie à champ proche.

2. Module d'assemblage selon la revendication 1, **caractérisé en ce que** le capteur de force (5) est un capteur de force piézoélectrique ou comprend une jauge de contrainte.

3. Module d'assemblage selon la revendication 1 ou 2, **caractérisé en ce que** l'électronique du capteur (7) comprend une mémoire de données (14) pour stocker des données concernant la mesure.

4. Module d'assemblage selon l'une quelconque des revendications précédentes comprenant un capteur de déplacement (15) pour détecter une trajectoire ou une position du poussoir.

5. Module d'assemblage selon la revendication 4, **caractérisé en ce que** ledit capteur de déplacement (15) lors de son utilisation est capable de détecter la distance d'un corps d'assemblage sur lequel le module d'assemblage exerce une force.

6. Module d'assemblage selon la revendication 4 ou 5, **caractérisé en ce que** ledit capteur de déplacement (15) est un capteur incrémental, inductif ou optique.

7. Module d'assemblage selon l'une quelconque des revendications précédentes, **caractérisé en ce que** l'enroulement de poussoir (8) est disposé dans une rainure (10) du poussoir (3).

8. Module d'assemblage selon l'une quelconque des revendications précédentes, **caractérisé en ce que** l'électronique du stator (9) comprend un ou plusieurs enroulements d'alimentation (11) capable de produire un champ magnétique alternatif pour induire une tension dans l'enroulement de poussoir (8) servant à l'alimentation électrique de l'électronique du capteur (7).

9. Module d'assemblage selon l'une quelconque des revendications précédentes, **caractérisé en ce que** ladite électronique du stator (9) est munie d'un enroulement récepteur ou une antenne réceptrice (12) pour recevoir des valeurs de mesure saisies et/ou informations complémentaires telles que l'état de l'électronique du capteur, la plage de mesure, des informations sur la mise à l'échelle et/ou des données d'étalonnage.
